# EUROPÄISCHE PATENTSCHRIFT

(11) **EP 0 569 923 B1**
(45) Veröffentlichungstag und Bekanntmachung des Hinweises auf die Patenterteilung: **06.08.1997**
(21) Anmeldenummer: 93107624.4
(22) Anmeldetag: 11.05.1993
(51) Int. Cl.: B65G 1/133, B65G 19/02

(54) **Umlaufförderer**
Endless conveyor
Transporteur sans fin

(30) Priorität: 11.05.1992 DE 4215012
(43) Veröffentlichungstag der Anmeldung: 18.11.1993
(73) Patentinhaber: LISTA NEUBURG GmbH + Co., 86476 Neuburg/Kammel (DE)
(72) Erfinder: McFarland, John, Warwickshire CV21 4DQ (GB); Katzenschwanz, Norbert, Dr., W-8908 Krumbach (DE)
(74) Vertreter: Fiener, Josef

(56) Entgegenhaltungen:
- FR-A- 2 382 729
- GB-A- 2 202 814
- US-A- 3 780 852

## Beschreibung

Die Erfindung betrifft einen Umlaufförderer mit den oberbegrifflichen Merkmalen des Patentanspruches 1.

Aus der GB-Z "Mechanical Handling", März 1968, Seiten 330/331 ist ein derartiger Umlaufförderer bekannt, bei dem in Horizontalebene umlaufende, an einer Förderkette geführte Lagergutträger an ihrem unteren Ende auf Stützrädern abgestützt sind. Die Stützräder laufen hierbei auf einer geschlossenen, bodenseitigen Schiene ab und sind an den Lagergutträgern etwa unterhalb deren Schwerpunkt angeordnet. Die Lagergutträger sind hierbei an ihrer oberen Endfläche mit einer durchgehenden, oben liegenden Führungsschiene verbunden.

Aus der GB-A-20 61 860 ist ein ähnlicher Umlaufförderer bekannt, wobei die Lagergutträger an ihrer oberen Endfläche, ähnlich der erstgenannten Druckschrift, mittels jeweils einer scharnierenden Hängekonstruktion mit der darüber umlaufenden Förderkette verbunden sind. Somit ist hier eine Erweiterung der Lagergutträger in Höhenrichtung nicht möglich, wie dies auch für einen Umlaufförderer gemäß der DE-A-39 04 384 gilt, bei dem die korbartigen Lagergutträger an ihrem oberen Ende an einer Führung aufgehängt sind und durch eine relativ grobgliedrige Förderkette angetrieben werden. Diese übliche Art der Aufhängung ist jedoch mit mehreren Nachteilen verbunden. So ist für eine hohe Beladung eine sehr stabile Ausführung des die Führung tragenden Rahmens erforderlich. Entsprechendes gilt für die die Führung umgreifende Aufhängung, die zudem aufgrund des erforderlichen hufeisenförmigen Umgriffs der Führung relativ kompliziert zu fertigen ist. Zudem sind der Variabilität des Umlaufförderers Grenzen gesetzt, da aufgrund der Aufhängung an der oberen Seite eine Erweiterung in Höhenrichtung nicht möglich ist bzw. hierzu eine vollständig neue Rahmenstruktur geschaffen werden müßte.

Aus der US-A-3,780,852 ist ein ähnlicher Umlaufförderer bekannt, bei dem an der Oberseite eine einzige Förderkette oberhalb der Lagergutträger umläuft. Damit wird, wie vorstehend angegeben, die Förderkette sehr grobgliedrig, so daß eine unruhige Umlaufbewegung entsteht. Insbesondere ist dabei auch durch diese obenliegende Anordnung der Förderkette eine Erweiterung der Lagergutträger nach oben hin ausgeschlossen, also die maximale Lagerhöhe durch die obenliegende Förderkette begrenzt.

Aus der GB-A-2 202 814 sind zwar sich nach oben erstreckende Lagergutträger bekannt, jedoch sind diese nicht durch eine Förderkette verbunden, sondern durch Verbindungslaschen. Durch diese gegenseitige Verbindung der Lagergutträger ist somit eine bestimmte Behälterbreite vorgegeben. Zudem ist ein Austausch oder eine Entnahme eines oder mehrerer Lagergutträger nicht möglich, da ansonsten kein Umlaufbetrieb mehr möglich wäre. Außerdem müßte bei einer Erweiterung nach oben hin der gesamte Satz der Lagergutträger ausgetauscht werden, um hierbei wieder eine einheitliche Umlaufebene der Verbindungslaschen zu schaffen.

Schließlich ist aus der FR-A-2 382 729 ein Umlaufförderer bekannt, bei dem zwei Förderketten gezeigt werden. Hierbei ist jedoch ein obenliegender Rahmen vorgesehen, der die Verwendung höherer Lagergutträger und den einfachen Austausch der Lagergutträger verhindert.

Demzufolge liegt der Erfindung die Aufgabe zugrunde, einen Umlaufförderer zu schaffen, der eine einfache Herstellung und große Variabilität aufweist.

Diese Aufgabe wird gelöst durch einen Umlaufförderer mit den Merkmalen des Patentanspruches 1.

Durch das Einhängen der Lagergutträger an ihrer Rückseite sind diese in Vertikalrichtung nach oben beliebig erweiterbar, so daß auch erheblich über die obere Förderkette hinausragende Lagergutträger Verwendung finden können. Dies ist beispielsweise bei der senkrechten Lagerung von Rohrmaterial oder ähnlichem von Vorteil. Da zudem die Hauptlast der Lagergutträger über die Stützschiene am oder im Boden abgefangen wird, braucht die Rahmenstruktur zwischen den Umlenkachsen keine Last mehr aufnehmen. Sie ist statisch nur durch die relativ geringen Führungskräfte belastet und braucht somit nicht mehr sonderlich stabil ausgeführt werden.

Zudem braucht beispielsweise bei zwei Meter hohen Lagergutträgern die Rahmenstruktur nicht über diese Höhe hinausgeführt werden, sondern kann für alle Typen beispielsweise auf 1,5 m in der Höhe ausgelegt sein. Durch diese Art Normung ergibt sich eine wesentliche Vereinfachung in der Herstellung. Zudem können durch die Ein- bzw. Aufhängung der Lagergutträger an ihrer Rückseite feingliedrige Ketten verwendet werden, wie sie als genormte Handelsware erhältlich sind, so daß keine aufwendigen Sonderanfertigungen mit grobgliedrigen Förderketten mehr erforderlich sind. Entsprechendes gilt für die Umlenkräder, die ebenfalls als Standardbauteile bezogen werden können. Durch die Verwendung von feingliedrigen Förderketten ergibt sich auch aufgrund des nahezu fehlenden Polygoneffektes ein ruhigerer Umlauf der beiden Förderketten und der daran einhängbaren Lagergutträger und damit eine Reduzierung des Geräuschverhaltens und des Verschleisses insbesondere eine Erhöhung der Standzeit der Förderketten.

Weitere vorteilhafte Ausgestaltungen sind Gegenstand der abhängigen Ansprüche.

Nachfolgend wird ein in der Zeichnung dargestelltes Ausführungsbeispiel näher beschrieben und erläutert. Es zeigen:
- Fig. 1: eine perspektivische Darstellung des Umlaufförderers;
- Fig. 2: einen Querschnitt durch eine Umlenkachse des Umlaufförderers; und
- Fig. 3: eine Einzelheit der Aufhängung und Kettenführung in vergrößerter Darstellung gem. Fig. 2.

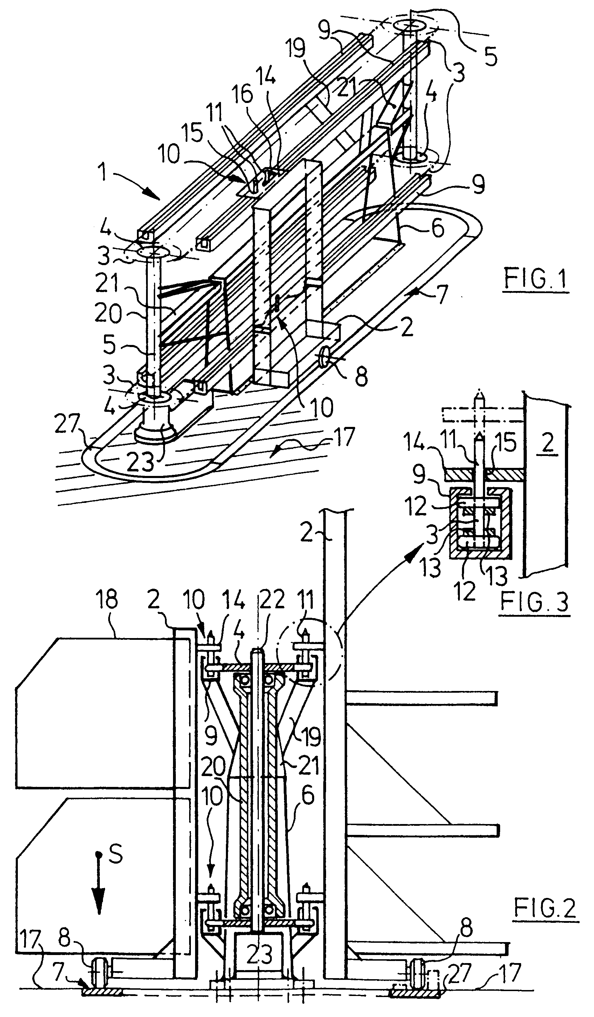

In Fig. 1 ist ein Umlaufförderer 1 schematisch dargestellt, wobei hier nur ein einziger Lagergutträger 2 dargestellt ist, um die innenliegenden Bauteile des Umlaufförderers 1 besser erkennen zu können. In der Ausführung des Umlaufförderers 1 sind selbstverständlich mehrere Lagergutträger 2, beispielsweise zehn derartiger Lagergutträger 2 am Umfang verteilt an zwei Förderketten 3 eingehängt. Die Förderketten 3 laufen jeweils in einer Horizontalebene um Umlenk- oder Kettenräder 4 um, die um eine vertikale Umlenkachse 5 drehbar gelagert sind. In dieser Ausführung sind zwei übereinander umlaufende Förderketten 3 vorgesehen, um die Stabilität und Gleichförmigkeit der Umlaufbewegung der Lagergutträger 2 zu verbessern.

Zwischen den beiden vertikalen Umlenkachsen 5 ist eine gitterartige Rahmenstruktur 6 vorgesehen, die im wesentlichen nur die Umlenkachsen 5 gegeneinander abstützt, ansonsten jedoch keine wesentliche tragende Funktion hat. Somit kann die Rahmenstruktur 6 sehr einfach aus Metallprofilen, Säulen und Verstrebungen hergestellt werden. Bevorzugt ist hierbei die Rahmenstruktur 6 modulartig ausgebaut, so daß die Länge des Umlaufförderers 1 leicht variiert werden kann.

Von Bedeutung ist insbesondere die Stützfläche 7 am Boden 17, die hier als Schiene 27 entsprechend der Umlaufbahn der Lagergutträger 2 aus zwei sich gegenüberliegenden geradlinigen Schienenteilen und im Umlenkbereich aus zwei halbkreisförmigen Schienenteilen aufgebaut ist. Auf dieser Stützfläche 7 rollt ein Stützrad 8, das unterhalb des Schwerpunkts S der Lagergutträger 2 angeordnet ist (vgl. auch Fig. 2). Es sei darauf hingewiesen, daß die Stützfläche 7 auch durch den Boden 17 selbst gebildet sein kann, wobei als Boden 17 bevorzugt ein mit Kunststoff versiegelter, glatter Industriefußboden benutzt wird, der gegenüber der Abrollbewegung des bevorzugt mit einer Gummilauffläche versehenen Stützrades 8 verschleißfest ist. Es kann jedoch auch ein glatter Betonboden aus höherer Betongüte vorgesehen sein.

Die Förderketten 3 werden neben der Führung an den Ketten- bzw. Umlenkrädern 4 zwischen diesen an Führungsschienen 9 geführt (vgl. auch Fig. 3), so daß auch bei Längung der Förderketten 3 eine exakte Führung der Lagergutträger 2 bzw. von dessen Stützrad 8 auf der Stützfläche 7 erreicht wird.

An der Rückseite der Lagergutträger 2 ist je eine Aufhängung 10 vorgesehen, mit der die Lagergutträger 2 formschlüssig mit den Förderketten 3 verbunden sind und somit die Umlaufbewegung mitvollziehen. In bevorzugter Ausführung ist die Aufhängung 10 einerseits durch die verlängerten Kettenbolzen 11 der Förderketten 3 gebildet, in die andererseits eine mit dem Lagergutträger 2 verbundene Aufnahmeleiste 14 eingehängt ist. Hierzu sind in der Aufnahmeleiste 14 eine Bohrung 15 und ein Langloch 16 vorgesehen, in die den Kettenbolzen 11 eingreifen. Das Langloch 16 folgt dabei - in Umlaufrichtung - der genau auf den Kettenbolzen 11 passenden Bohrung 15 nach, da bei der Umlenkung um die Umlenkräder 4 die Sehne kürzer ist als der Abstand der Kettenbolzen 11 bei der geradlinigen Bewegung zwischen den Umlenkachsen 5. Wie insbesondere in Fig. 3 dargestellt ist, werden die Kettenglieder 13 der Förderketten 3 mittels Führungsrollen 12 exakt in der Führungsschiene 9 geführt, so daß die Aufhängung 10 quer zur Umlaufrichtung exakt positioniert ist.

In Fig. 2 ist ein Querschnitt durch die in Fig. 1 vordere Umlenkachse 5 dargestellt. Hierbei sind unterschiedlich hohe Lagergutträger 2 dargestellt, um die Variabilität in Höhenrichtung anzudeuten. Die Lagergutträger 2 stützen sich hierbei über das Stützrad 8 auf der Stützfläche 7 hier in Form der Schiene 27 ab, die hier im Boden 17 bündig eingelassen ist. Beispielsweise können die Einzelteile der Schiene 27 im Boden oder auf dem Boden 17 auch ein- bzw. aufgeklebt werden. Ebenso ist eine Schraub-Befestigung der Schiene 27 bündig mit dem Boden 17 oder auf dem Boden möglich. An den einzelnen Lagergutträgern 2 können verschiedene Warenkörbe 18, beispielsweise geschlossene Container oder Drahtkörbe oder, wie rechts dargestellt, einzelne Tablare oder Kunststoffbehälter eingehängt werden. Je nach radialer Erstreckung der Warenkörbe 18 ergibt sich der Schwerpunktbereich S, unter dem die Stützfläche 7 und das Stützrad 8 angeordnet ist. Es sei darauf hingewiesen, daß bei einem Wechsel der Warenkörbe 18 sich der Schwerpunktbereich S geringfügig verändern kann, wobei dann das Stützrad 8 z. B. durch eine teleskopierbare Achse nach außen oder innen entsprechend verstellt werden kann. Um solchen Änderungen im Schwerpunktbereich S zu begegnen, ist die Schiene 27 bevorzugt relativ breit ausgebildet, so daß die Umlaufbahn des entsprechend verstellten Stützrades 8 daran angepaßt werden kann.

Wie ersichtlich, sind die hier beiden übereinanderliegenden Förderketten 3 jeweils in Führungsschienen 9 geführt, die über Halterungen 19 mit der Rahmenstruktur 6 verbunden sind. Die beiden übereinanderliegenden Umlenkräder 4 sind durch ein Tragrohr 20 miteinander verbunden, das in leicht auskragender Weise (vgl. Fig. 1) mit der Rahmenstruktur 6 über Konsolen 21 verbunden ist. Die beiden Umlenkräder 4 werden hier durch eine gemeinsame Welle 22 angetrieben, an der hier, wie schematisch dargestellt, ein Motor 23 angeflanscht ist.

In Fig. 3 ist eine Einzelheit hinsichtlich der Führungsschiene 9 vergrößert dargestellt. Die Führungsschiene 9 weist einen im wesentlichen U-förmigen Querschnitt auf und ist nach oben hin offen, so daß die verlängerten Kettenbolzen 11 aus der Führungsschiene 9 herausragen können. Oberhalb und unterhalb der Kettenglieder 13 sind hier zwei Führungsrollen 12 vorgesehen, die ebenfalls mit an den Kettenbolzen 11 gelagert sind und eine exakte Führung innerhalb der Führungsschiene 9 gewährleisten. Es sei darauf hingewiesen, daß derartige Führungsrollen 12 nicht an jedem Kettenbolzen erforderlich sind, sondern beispielsweise nur an jedem der verlängerten Kettenbolzen 11, die bei der angestrebten feingliedrigen Bauweise der Förderketten 3 beispielsweise jeden zehnten Kettenbolzen bilden.

Durch diese Art der Aufhängung mit den verlängerten, nach oben hinausragenden Kettenbolzen 11 ist ein einfacher Austausch der Lagergutträger 2 möglich. So kann der Lagergutträger 2 durch Anheben leicht aus der Aufhängung 10 entnommen werden bzw. ein anders ausgestalteter Lagergutträger 2 durch Einhängen der Aufnahmeleiste 14 an den Kettenbolzen 11 wieder eingehängt werden, wie dies für Kommissionierzwecke vorteilhaft sein kann.

Wie oben angedeutet, sind zwei im Abstand voneinander umlaufende Förderketten 3 vorgesehen, da hierdurch ungleiche Beladungen des Lagergutträgers 2 durch zuverlässige Abstützung über die Führungsschienen 9 ausgeglichen werden können. Zur Verhinderung des Kippens der Lagergutträger 2 quer zur Umlaufrichtung kann auch eine doppelte Ausführung der Aufhängung 10 vorgesehen sein, wie dies in Fig. 3 in Strichpunktlinien angedeutet ist. Hierzu ist der Kettenbolzen 11 weiter verlängert, so daß hieran zwei übereinanderliegende Aufnahmeleisten 14 angreifen und somit eine Drehmomentabstützung um eine Horizontalachse ermöglichen. Um ein Kippen der Lagergutträger 2 zu vermeiden, kann jedoch anstatt der vorbeschriebenen Doppelaufhängung auch die Schiene 27 U-förmig ausgebildet sein, so daß das Stützrad 8 eine Kippbewegung des Lagergutträgers 2 sicher verhindert. Diese U-förmige Ausbildung der Schiene 27 ist in Fig. 2 im unteren rechten Bildteil ebenfalls in Strichpunktlinien dargestellt.

Die über die Führungsschiene 9 hinausragende Höhe der Kettenbolzen 11 ist hierbei so gewählt, daß auch bei leichten Unebenheiten der Stützfläche 7 die Aufnahmeleiste 14 sicher verankert ist. Zudem ermöglicht die vertikale Beweglichkeit der Aufnahmeleiste 14 bezüglich der Kettenbolzen 11 durch Verschiebung in der Bohrung 15 und dem Langloch 16 den Betrieb des Umlaufförderers selbst bei unebener Stützfläche 7 bzw. Boden 17 bzw. Schiene 27, so daß an deren Glattflächigkeit keine hohen Anforderungen gestellt werden brauchen. Hierdurch kann der Umlaufförderer 1 auch auf relativ rauhen und leicht welligen Hallenböden ohne großen Aufwand montiert werden.

## Patentansprüche

1. Umlaufförderer (1) mit mehreren Lagergutträgern (2), die von wenigstens einer horizontal umlaufenden Förderkette (3) auf einer geschlossenen, aus zwei sich jeweils gegenüberliegenden geradlinigen und halbkreisförmigen Abschnitten bestehenden Bahn bewegt werden, wobei die Förderkette (3) jeweils um zwei um vertikale Umlenkachsen (5) rotierende Umlenkräder (4) geführt ist, und die Lagergutträger (2) am unteren Ende in ihrem Schwerpunktbereich (S) mit einem Stützrad (8) auf einer Stützfläche (7) am Boden (17) abgestützt sind,
dadurch gekennzeichnet, daß
die Lagergutträger (2) jeweils an ihrer Rückseite ein hängbar an einer Aufhängung 10 mit zwei im Abstand übereinander umlaufenden Förderketten (3) verbunden sind.

2. Umlaufförderer nach Anspruch 1,
dadurch gekennzeichnet, daß
je eine Förderkette (3) am oberen und unteren Endbereich der Lagergutträger (2) vorgesehen ist.

3. Umlaufförderer nach Anspruch 1 oder 2,
dadurch gekennzeichnet, daß
die Aufhängung (10) jeweils durch Kettenbolzen (11) der Förderkette (3) gebildet ist, die in eine Aufnahmeleiste (14) des jeweiligen Lagergutträgers (2) eingreifen.

4. Umlaufförderer nach Anspruch 3,
dadurch gekennzeichnet, daß
die Aufnahmeleiste (14) je eine Bohrung (15) und in Umlaufrichtung nachfolgend ein Langloch (16) aufweist.

5. Umlaufförderer nach einem der Ansprüche 1 bis 4,
dadurch gekennzeichnet, daß
die Stützfläche (7) durch eine Schiene (27) gebildet ist.

6. Umlaufförderer nach Anspruch 5,
dadurch gekennzeichnet, daß
die Schiene (27) im Boden (17) bündig eingelassen ist.

7. Umlaufförderer nach einem der Ansprüche 1 bis 6,
dadurch gekennzeichnet, daß
der Lagergutträger (2) über die Umlaufebene der obersten Förderkette (3) hinausragt.

8. Umlaufförderer nach einem der Ansprüche 1 bis 7,
dadurch gekennzeichnet, daß
die Förderkette (3) jeweils zwischen den Umlenkrädern (4) in einer mit dem Rahmen (6) des Umlaufförderers (1) verbundenen Führungsschiene (9) geführt ist.

9. Umlaufförderer nach Anspruch 8,
dadurch gekennzeichnet, daß
die Führungsschiene (9) einen U-förmigen Querschnitt aufweist und die Förderkette (3) hierin jeweils an Führungsrollen (12) geführt ist.

10. Umlaufförderer nach einem der Ansprüche 1 bis 9,
dadurch gekennzeichnet, daß
der Rahmen (6) zwischen den Umlenkachsen (5) gitterartig und in Modulbauweise ausgeführt ist.

## Claims

1. Endless conveyor (1) with a plurality of stored goods carriers (2) which are moved by means of at least one horizontally circulating conveyor chain (3) along a path consisting of two respectively opposed straight sections and opposed semi-circular sections, wherein the conveyor chain (3) is respectively guided round two deviating wheels (4) rotating about two vertical deviating axes (5), and wherein the stored goods carriers (2) are supported at their lower ends in the regions of their centers of gravity (S), with a support wheel (8) on a support surface (7) on the ground (17),
characterized in that
each of the stored goods carriers (2) is adapted to engage by its rear side a linkage (10) connected to two spaced conveyor chains (3) circulating above each other.

2. Endless conveyor according to claim 1, characterized in that a conveyor chain (3) is provided at each of the upper and lower end regions of the stored goods carriers (2).

3. Endless conveyor according to claim 1 or 2, characterized in that the linkage (10) is respectively formed by chain pins (11) of the conveyor chain (3), which engage in a coupling link (14) of the respective stored goods carrier (2).

4. Endless conveyor according to claim 3, characterized in that the coupling link (14) has a bore (15) and a slot (16) each, following thereon in the circulating direction.

5. Endless conveyor according to any of claims 1 to 4, characterized in that the support surface (7) is formed by a rail (27).

6. Endless conveyor according to claim 5, characterized in that the rail (27) is let flush into the ground (17).

7. Endless conveyor according to any of claims 1 to 6, characterized in that the stored goods carrier (2) projects above the plane of circulation of the uppermost conveyor chain (3).

8. Endless conveyor according to any of claims 1 to 7, characterized in that the conveyor chain (3) is respectively guided between the deviating wheels (4) in a guide rail (9) connected to the frame (6) of the endless conveyor (1).

9. Endless conveyor according to claim 8, characterized in that the guide rail (9) has a U-shaped cross-section and the conveyor chain (3) is respectively guided therein on guide rollers (12).

10. Endless conveyor according to any of claims 1 to 9, characterized in that the frame (6) is implemented between the deviating axes (6) as a grid and in a modular mode of construction.

## Revendications

1. Transporteur sans fin (1) avec plusieurs plateaux-supports pour le produit stocké (2), déplacés par au moins une chaîne de transport sans fin (3) circulant horizontalement sur une voie fermée, constituée par deux sections droites et circulaires respectivement opposées, la chaîne de transport (3) étant guidée respectivement sur deux poulies de renvoi (4) tournant sur des axes de renvoi verticaux (5) et les plateaux-supports du produit stocké (2) étant, dans la zone de leur centre de gravité (S), maintenus au sol par une roue de support (8) sur une surface d'appui (7) à l'extrémité inférieure, **caractérisé** en ce que les plateaux-supports du produit stocké (2), respectivement accrochables à un dispositif d'accrochage (10) sur leur face arrière, sont reliés à deux chaînes de transport (3) circulant l'une au dessus de l'autre avec un certain écart.

2. Transporteur sans fin selon la revendication 1, **caractérisé** en ce qu'une chaîne de transport (3) est respectivement prévue dans la partie d'extrémité supérieure et inférieure des plateaux-supports du produit stocké (2).

3. Transporteur sans fin selon la revendication 1 ou 2, **caractérisé** en ce que le dispositif d'accrochage (10) est formé respectivement par des tourillons de chaînes (11) de la chaîne de transport (3), qui ont prise dans une barre de fixation (14) du plateau-support du produit stocké respectif (2).

4. Transporteur sans fin selon la revendication 3, **caractérisé** en ce que la barre de fixation (14) présente respectivement un trou (15) et, en aval dans le sens de déplacement, un trou oblong (16).

5. Transporteur sans fin selon une des revendications 1 à 4, **caractérisé** en ce que la surface d'appui (7) est formée par un rail (27).

6. Transporteur sans fin selon la revendication 5, **caractérisé** en ce que le rail (27) est encastré au ras du sol (17).

7. Transporteur sans fin selon une des revendications 1 à 6, **caractérisé** en ce que le plateau-support du produit stocké (2) dépasse le plan de circulation de la chaîne de transport supérieure (3).

8. Transporteur sans fin selon une des revendications 1 à 7, **caractérisé** en ce que la chaîne de transport (3) est guidée respectivement entre les poulies de renvoi (4) dans un rail de guidage (9) relié au cadre (6) du transporteur sans fin.

9. Transporteur sans fin selon la revendication 8, **caractérisé** en ce que le rail de guidage (9) présente une section en forme de U et que la chaîne de transport (3) est guidée dans ce rail respectivement sur des poulies de guidage (12).

10. Transporteur sans fin selon une des revendications 1 à 9, **caractérisé** en ce que le cadre (6) entre les axes de renvoi (5) est grillagé et modulaire.
